# EUROPÄISCHE PATENTSCHRIFT

(11) **EP 2 218 665 B1**
(45) Veröffentlichungstag und Bekanntmachung des Hinweises auf die Patenterteilung: **23.11.2011**
(21) Anmeldenummer: 10153228.1
(22) Anmeldetag: 10.02.2010
(51) Int. Cl.: B65G 47/72, B65G 53/56

(54) **Vorrichtung zum wahlweisen Beschicken mehrerer Förderleitungen mit einem Schüttgut**
Device for selective charging of multiple pipes with bulk material
Dispositif de chargement au choix de plusieurs conduites de transport avec des produits en vrac

(30) Priorität: 13.02.2009 DE 102009008927
(43) Veröffentlichungstag der Anmeldung: 18.08.2010
(73) Patentinhaber: Köhl Maschinenbau AG, 6868 Wecker (LU)
(72) Erfinder: Werner, Hartmut, 21395, Tespe (DE)
(74) Vertreter: Grosse, Wolfgang

(56) Entgegenhaltungen:
- WO-A1-99/24335
- DE-A1- 2 025 911
- DE-U1-202007 013 754
- FR-A1- 2 292 647
- GB-A- 2 148 226

## Beschreibung

Die Erfindung betrifft eine Vorrichtung zum wahlweisen Beschicken mehrerer Förderleitungen mit einem Schüttgut, insbesondere einem Tabak, umfassend wenigstens einen Fallschacht, dessen Schachtwandungen Anschlussöffnungen zum Anschließen der Förderleitungen aufweisen.

Bekannte Vorrichtungen werden als Schwerkraftbeschicker bzw. Grafity-Feeder bezeichnet, und weisen bis zu drei Anschlussöffnungen auf. Die daran anzuschließenden Förderleitungen dienen der bedarfsweisen Versorgung zueinander parallel geschalteter Produktionslinien mit dem vorzugsweise in einem Luftstrom transportierten Schüttgut. Durch Wartungs-, Instandhaltungs- und Reinigungsarbeiten bedingte Maschinenstillstände innerhalb einer Produktionslinie bewirken jedoch, dass es im Inneren des Fallschachtes vor der Anschlussöffnung der jeweils still stehenden Produktionslinie zu einer Anhäufung von Schüttgut kommt, welche die nachfolgende Inbetriebnahme der Produktionslinie behindert. Für eine erfolgreiche Inbetriebnahme ist es oftmals unerlässlich, sämtliche zueinander parallel geschaltete Produktionslinien anzuhalten, den Fallschacht zu öffnen und von Schüttgutanhäufungen manuell zu befreien. Das Abschalten und erneute Anfahren sämtlicher Produktionslinien ist jedoch zeitintensiv und hat zudem die Produktion größerer Ausschussmengen zur Folge. Außerdem birgt das Öffnen des Fallschachtes ein zusätzliches Risiko, dass schädliche Mikroorganismen und Fremdstoffe in die Produktionslinien gelangen.

Aus DE 2 025 911 A1 ist eine Vorrichtung zum wahlweisen Beschicken mehrerer Förderleitungen mit einem Schüttgut bekannt, gemäss dem Oberbegriff des Anspruchs 1. Bei dieser Vorrichtung kann eine Ablenkung des Schüttgutstroms auf höchstens eine Anschlussöffnung erfolgen.

Der Erfindung liegt deshalb die Aufgabe zugrunde, eine Vorrichtung der eingangs genannten Gattung aufzuzeigen, bei der einzelne Produktionslinien abgeschaltet werden können, ohne dass es zu Schüttgutanhäufungen im Inneren des Fallschachtes kommt, und bei der der Schüttgtustrom auf mehr als eine Anschulussöffnung abgelenkt werden kann.

Diese Aufgabe ist erfindungsgemäß durch eine Vorrichtung mit den Merkmalen des Patentanspruches 1 gelöst. Vorteilhafte Weiterbildungen der Erfindung sind in den auf den Patentanspruch 1 rückbezogenen Unteransprüchen angegeben.

Die erfindungsgemäße Vorrichtung zeichnet sich dadurch aus, dass den Anschlussöffnungen im Fallschacht positionierbare Leitbleche zugeordnet sind. Die Leitbleche dienen der Abschirmung derjenigen Anschlussöffnungen vor Schüttgut, deren Produktionslinien still stehen. Auf die Leitbleche auftreffende Schüttgutteilchen werden in Richtung derjenigen Anschlussöffnungen abgelenkt, deren Produktionslinien sich im Betrieb befinden. Auf diese Weise sind vor den Anschlussöffnungen inaktiver Produktionslinien entstehenden Schüttgutanhäufungen weitgehend vermieden. Die Leitbleche sind vorzugsweise planflächig ausgebildet. Es liegt jedoch im Rahmen der Erfindung, gebogene oder gewölbte Leitbleche vorzusehen. Alternativ können die Leitbleche auch zu Hohl- oder Vollkörpern erweitert sein.

Nach einer ersten Weiterbildung der Erfindung weisen die Schachtwandungen Schübe auf, wobei die Schübe mit den Leitblechen zusammenwirkende Führungen aufweisen. Auf diese Weise können die Leitbleche in den Schüben hin- und herbewegt werden, wobei sie wahlweise in den Strömungskanal des Fallschachtes hineinbewegbar oder aus diesem herausbewegbar sind. Die Schübe erlauben somit eine fortwährende Anpassung der im Inneren des Fallschachtes vorherrschenden Strömungsverhältnisse an die jeweils aktuelle Schüttgutabnahmesituation an den Anschlussöffnungen des Fallschachtes. Die Anzahl der Schübe ist von der Anzahl der im Fallschacht angeordneten Anschlussöffnungen abhängig. Vorzugsweise weisen die Schachtwandungen so viele Schübe auf, dass jede beliebige Auswahl von Anschlussöffnungen gegen das Schüttgut abgeschirmt bzw. mit dem Schüttgut konfrontiert werden kann.

Nach einer nächsten Weiterbildung der Erfindung sind die Schübe in V- und V-fragmentförmigen Formationen zueinander angeordnet und jeweils in einem spitzen Winkel zur Längsachse des Fallschachtes ausgerichtet. Dabei hängt auch hier die Anzah der V- und V-fragmentförmigen Formationen von der Anzahl der im Fallschacht angeordneten Anschlussöffnungen ab. Unter einer V-fragmentförmigen Formation soll im Rahmen dieser Erfindung jede in einem spitzen Winkel zur Längsachse des Fallschachtes ausgerichtete ein- oder zweischenklige Formation gelten, deren Schenkel einen Schub, mehrere Schübe oder eine unterschiedliche Anzahl von Schüben aufweisen.

Um die im Fallschacht vorherrschenden Strömungsverhältnisse besonders schnell an die jeweils aktuelle Schüttgutabnahmesituation an den Anschlussöffnungen des Fallschachtes anpassen zu können, ist den Leitblechen jeweils wenigstens ein Stellantrieb zugeordnet, wobei die Stellantriebe über eine elektrische Steuerung miteinander verbunden sind. Die elektrische Steuerung ist mit Vorteil Bestandteil eines handelsverfügbaren PCs, dessen Recheneinheit das Bedienen weiterer Regel- und Steuerkreise zur Optimierung der Strömungsverhältnisse im Strömungsraum des Fallschachtes ermöglicht. Die Stellantriebe können sowohl hydraulische als auch elektromotorische oder pneumatische Wirkprinzipien aufweisen.

Nach einer besonders - zweckmäßigen- Weiterbildung der Erfindung ist wenigstens eine der Schachtwandungen als Revisionstür ausgebildet. Damit ist der Fallschacht über seine gesamte Höhe sowie seine gesamte Breite frei zugänglich für Wartungs-, Instandsetzungs- und Reinigungsarbeiten. Selbstverständlich liegt es im Rahmen der Erfindung, dass lediglich ein Ausschnitt oder Teilabschnitt der Schachtwandungen als Revisionstür ausgebildet ist oder dass in den Schachtwandungen mehrere Revisionstüren angeordnet sind.

Nach einer anderen, besonders zweckmäßigen Weiterbildung der Erfindung ist wenigstens eine der Schachtwandungen aus einem transparente Eigenschaften aufweisenden Material ausgebildet. Dieses ermöglicht vorteilhaft eine optische Früherkennung von im Fallschacht entstehenden Anhäufungen und Anhaftungen aus Schüttgut. Das frühzeitige Erkennen derartiger Anhäufungen und Anhaftungen aus Schüttgut vermeidet die Produktion von Ausschussmengen, da Reinigungsarbeiten rechtzeitig durchführbar sind.

Für eine unverzügliche Reaktion der elektrischen Steuerung auf eine Änderung der Schüttgutabnahmesituation an den Anschlussöffnungen ist nach einer besonders einfachen und gleichwohl wirkungsvollen Weiterbildung der Erfindung vorgesehen, dass die elektrische Steuerung in den Förderleitungen anordbare Signalgeber aufweist. Derartige Signalgeber sind beispielsweise einen Förderstrom detektierende Strömungssensoren oder das Schüttgut detektierende Fotosensoren. Bevorzugt wird vorgeschlagen, in den Förderleitungen als Unterdrucksensoren ausgebildete Signalgeber anzuordnen.

Nach einer nächsten besonders wirkungsvollen Weiterbildung der Erfindung weist der Fallschacht in seinen Strömungsraum gerichtete Druckluftdüsen auf. Diese ermöglichen vorteilhaft die Auflösung von Anhäufungen und Anhaftungen des Schüttgutes bei laufender Produktion. Dazu sind die Druckluftdüsen insbesondere auf -diejenigen Bereiche des vom Fallschacht umgebenen Strömungsraumes ausgerichtet, in denen erfahrungsgemäß mit dem Aufbau von Anhäufungen und Anhaftungen zu rechnen ist. Die Druckluftdüsen werden mit Vorteil in regelmäßigen Zeitintervallen betätigt, so dass die Entstehung von Anhäufungen und Anhaftungen bereits im Ansatz verhindert ist. Die Druckluftdüsen sind vorzugsweise quer zu den Anschlussöffnung bzw. deren Förderleitungen ausgerichtet. Außerdem sind die Druckluftdüsen zu beiden Seiten der Anschlussöffnungen angeordnet. Da die Entstehung von Anhäufungen und Anhaftungen des Schüttgutes auch von den jeweils aktuellen Schüttgutabnahmesituationen an den Anschlussöffnungen des Fallschachtes abhängig ist, wird vorgeschlagen, die Druckluftdüsen über die elektrische Steuerung derart anzusteuern, dass Anhäufungen und Anhaftungen von den jeweils inaktiven Förderleitungen in Richtung der aktiven Förderleitungen geblasen werden.

Eine andere Möglichkeit zur Auflösung von insbesondere an den Leitblechen entstehenden Anhäufungen und Anhaftungen aus Schüttgut ist dadurch geschaffen, dass jeder Schub wenigstens ein an dem ihm zugeordneten Leitblech anstehendes Abstreiforgan aufweist. Die Auflösung der Anhäufungen und Anhaftungen wird durch wenigstens eine sekundenschnelle Hin- und Herbewegung der Leitbleche in den ihnen zugeordneten Schüben erreicht. Anhäufungen von Tabakfasern oder Tabakstaub sind somit zuverlässig verhindert. Die Abstreiforgane fungieren vorzugsweise zugleich als Dichtungen, mit denen die Leitbleche die in den Schachtwandungen angeordneten Schübe gegen Leckagen abdichten.

Um zu gewährleisten, dass an den Schüben auch dann keine Leckageverluste auftreten, wenn die Leitbleche aus dem Strömungsraum des Fallschachtes herausbewegt sind, weist jeder Stellantrieb einen Stellweg auf, dessen Länge kleiner ist als die Tiefe des ihm jeweils zugeordneten Schubes. Dabei ist die Tiefe des Schubes außenseitig durch die Anordnung einer Dichtung begrenzt.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht einer erfindungs- gemäßen Vorrichtung in einem Anwendungs- beispiel;
- Fig. 2:: eine erste vergrößerte Ansicht der erfindungs- gemäßen Vorrichtung gemäß Fig. 1 und
- Fig. 3:: eine zweite vergrößerte Ansicht der erfindungs- gemäßen Vorrichtung gemäß Fig. 1.

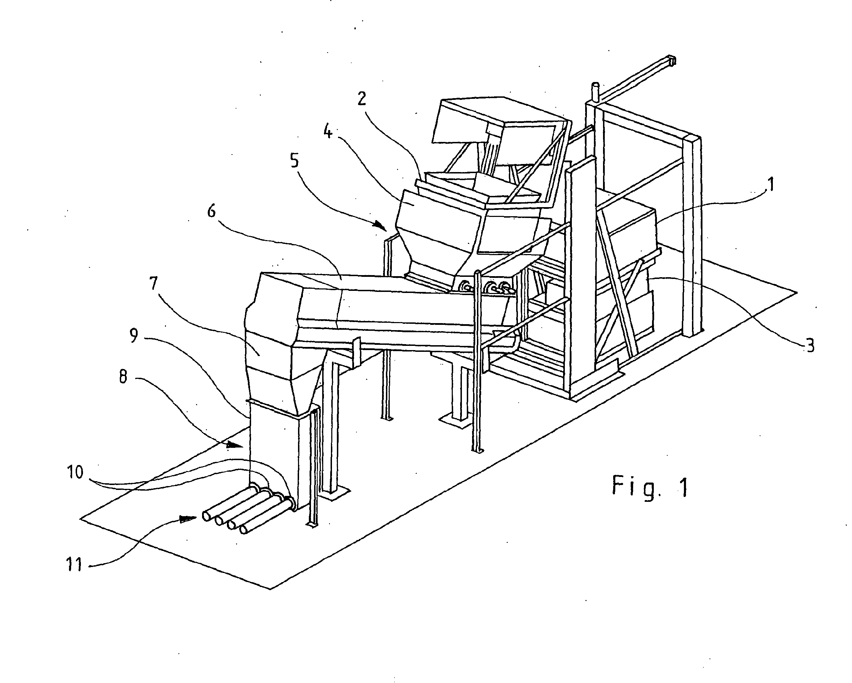

Die Fig. 1 zeigt eine perspektivische Ansicht einer erfindungsgemäßen Vorrichtung in einem ersten Anwendungsbeispiel. Hier wird in Kippwagen 1, 2 angeliefertes Schüttgut 3 in den Trichter 4 einer Auflockerungseinheit 5 gegeben. Das die Auflockerungseinheit 5 aufgelockert verlassende Schüttgut 3 wird über einen Bandförderer 6 in einen Trichter 7 befördert, über welchen es in einen Fallschacht 8 hinein fällt. Der Fallschacht 8 weist in seiner transparente Eigenschaften aufweisenden vorderen Schachtwandung 9 angeordnete Anschlussöffnungen 10 auf, über welche das den Fallschacht 8 hinab fallende Schüttgut 3 über vier Förderleitungen 11 verschiedenen Produktionslinien zugeführt wird.

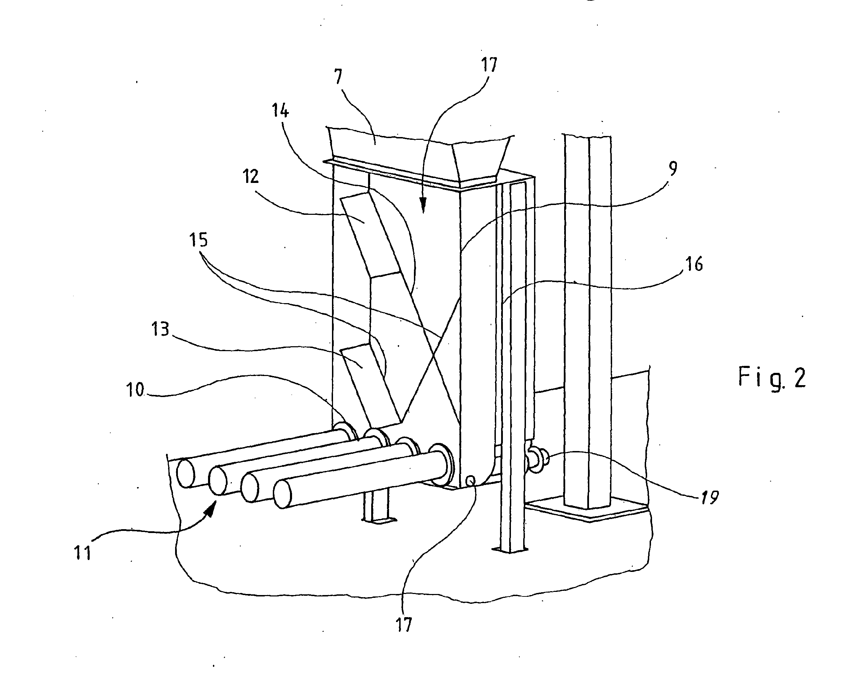

Die Fig. 2 zeigt eine erste vergrößerte Ansicht der erfindungsgemäßen Vorrichtung gemäß Fig. 1. Aus dieser Ansicht lässt sich rekonstruieren, dass den vier Anschlussöffnungen 10 acht im Fallschacht 8 positionierbare Leitbleche 12, 13 zugeordnet sind. Die Zuordnung der Leitbleche 12, 13 zu den einzelnen Anschlussöffnungen 10 erfolgt über eine der Anzahl der Leitbleche 12, 13 entsprechende Anzahl an Schüben 14, 15, die in der hinteren Schachtwandung 16 des Fallschachtes 8 angeordnet sind. Die in der Fig. 2 dargestellte Schüttgutabnahmesituation zeigt zwei der acht Leitbleche 12, 13 in einer in den Strömungsraum 17 des Fallschachtes 8 hinein bewegten Position. Außerdem weist der Fallschacht 8 in seinen Strömungsraum 17 gerichtete Druckluftdüsen 18 sowie vier den Anschlussöffnungen 10 gegenüberliegend angeordnete Falschluftanschlüsse 19 auf. Gleiche Bauteile sind mit gleichen Bezugszahlen versehen.

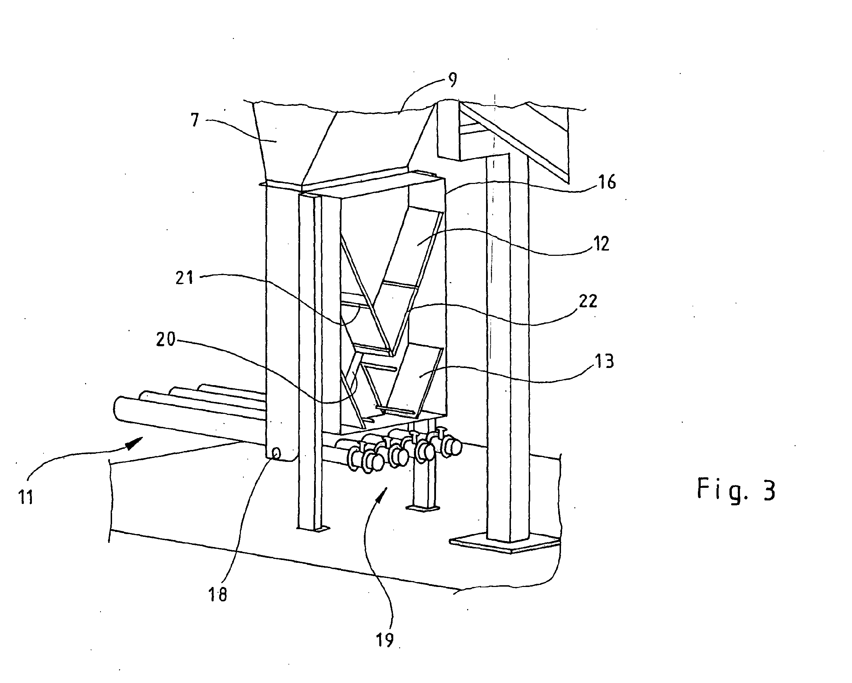

Die Fig. 3 zeigt eine zweite vergrößerte Ansicht der erfindungsgemäßen Vorrichtung gemäß Fig. 1. Diese Ansicht ist zu der in Fig. 2 dargestellten Ansicht um etwa 90 Grad gedreht. Mit der Fig. 3 wird deutlich, dass die Schübe 14, 15 in V- und V-fragmentförmigen Formationen zueinander angeordnet sind und jeweils in einem spitzen Winkel zur Längsachse des Fallschachtes 8 ausgerichtet sind. Die Schübe 14, 15 sind mittels an der vorderen Schachtwandung 9 befestigten Begrenzungsschienen 20 und Auflagerstiften 21 sowie in der hinteren Schachtwandung 16 angeordneten Schlitzen 22 ausgebildet. Die hintere Schachtwandung 16 ist als transparente Eigenschaften aufweisende Revisionstür ausgebildet. Gleiche Bauteile sind mit gleichen Bezugszahlen versehen.

## Patentansprüche

1. Vorrichtung zum wahlweisen Beschicken mehrerer Förderleitungen (11) mit einem Schüttgut, insbesondere einem Tabak, umfassend wenigstens einen Fallschacht (8) dessen Schachtwandungen (9,16) Anschlussöffnungen (10) zum Anschliessen der Förderleitunge (11) aufweisen, **dadurch gekennzeichnet,**
**dass** den Anschlussöffnungen (10) im Fallschacht (8) positionierbare Leitbleche (12, 13) zur Ablenkung des Schüttgutstroms auf in Betrieb befindliche Anschlussöffnungen zugeordnet sind.

2. Vorrichtung nach Anspruch 1, **dadurch gekennzeichnet, dass** die Schachtwandungen (9, 16) Schübe (14, 15) aufweisen, und dass die Schübe (14, 15) mit den Leitblechen (12, 13) zusammenwirkende Führungen aufweisen.

3. Vorrichtung nach Anspruch 2, **dadurch gekennzeichnet, dass** die Schübe (14, 15) in V-und V-fragmentförmigen Formationen zueinander angeordnet und jeweils in einem spitzen Winkel zur Längsachse des Fallschachtes (8) ausgerichtet sind.

4. Vorrichtung nach einem der Ansprüche 1 bis 3, **dadurch gekennzeichnet, dass** den Leitblechen (12, 13) jeweils wenigstens ein Stellantrieb zugeordnet ist, und dass die Stellantriebe über eine elektrische Steuerung miteinander verbunden sind.

5. Vorrichtung nach einem der Ansprüche 1 bis 4, **dadurch gekennzeichnet, dass** wenigstens eine der Schachtwandungen (9, 16) als Revisionstür ausgebildet ist.

6. Vorrichtung nach einem der Ansprüche 1 bis 5, **dadurch gekennzeichnet, dass** wenigstens eine der Schachtwandungen (9, 16) aus einem transparente Eigenschaften aufweisenden Material ausgebildet ist.

7. Vorrichtung nach einem der Ansprüche 4 bis 6, **dadurch gekennzeichnet, dass** die elektrische Steuerung in den Förderleitungen (11) anordbare Signalgeber aufweist.

8. Vorrichtung nach einem der Ansprüche 1 bis 7, **dadurch gekennzeichnet, dass** der Fallschacht (8) in seinen Strömungsraum (17) gerichtete Druckluftdüsen (18) aufweist.

9. Vorrichtung nach einem der Ansprüche 2 bis 8, **dadurch gekennzeichnet, dass** jeder Schub (14, 15) wenigstens ein an dem ihm zugeordneten Leitblech (12, 13) anstehendes Abstreiforgan aufweist.

10. Vorrichtung nach einem der Ansprüche 4 bis 9, **dadurch gekennzeichnet, dass** jeder Stellantrieb einen Stellweg aufweist, dessen Länge kleiner ist als die Tiefe des ihm jeweils zugeordneten Schubes (14, 15).

## Claims

1. Apparatus for selectively charging feed pipes (11) with a bulk material, particularly a tobacco, including at least one drop shaft (8), whose shaft walls (9, 16) have connection openings (10) for connecting the feed pipes (11), **characterised in that** associated with the connection openings (10) in the drop shaft (11) there are positionable guide plates (12, 13) for deflecting the flow of bulk material to connection openings which are in operation.

2. Apparatus as claimed in Claim 1, **characterised in that** the shaft walls (9, 16) have runner grooves (14, 15) and that the runner grooves (14, 15) have guides cooperating with the guide plates (12, 13).

3. Apparatus as claimed in Claim 2, **characterised in that** the runner grooves (14, 15) are arranged in V-shaped and partial V-shaped formations with respect to one another and are each aligned at an acute angle to the longitudinal axis of the drop shaft (8).

4. Apparatus as claimed in one of Claims 1 to 3, **characterised in that** associated with each of the guide plates (12, 13) is a respective actuator and that the actuators are connected together via an electrical controller.

5. Apparatus as claimed in one of Claims 1 to 4, **characterised in that** at least one of the shaft walls (9, 16) is constructed as an inspection door.

6. Apparatus as claimed in one of Claims 1 to 5, **characterised in that** at least one of the shaft walls (9, 16) is constructed of a material having transparent properties.

7. Apparatus as claimed in one of Claims 4 to 6, **characterised in that** the electrical controller has sensors arrangeable in the feed pipes (11).

8. Apparatus as claimed in one of Claims 1 to 7, **characterised in that** the drop shaft (8) has compressed air nozzles (18) directed into its flow space (17).

9. Apparatus as claimed in one of Claims 2 to 8, **characterised in that** each runner groove (14, 15) has at least one stripper element projecting on the guide plate (12, 13) associated with it.

10. Apparatus as claimed in one of Claims 4 to 9, **characterised in that** each actuator has a movement path whose length is smaller than the depth of the respective runner groove (14, 15) associated with it.

## Revendications

1. Dispositif de chargement au choix de plusieurs conduites de transport (11) avec du produit en vrac, en particulier un tabac, comprenant au moins un puits de chute (8), dont les parois de puits (9, 16) présentent des ouvertures de raccordement (10) pour le raccordement des conduites de transport (11),
**caractérisé en ce que**
des tôles de guidage (12, 13), susceptibles d'êtres positionnées dans le puits de chute (8), sont associées aux ouvertures de raccordement (10), pour dévier le flux de produit en vrac sur des ouvertures de raccordement se trouvant en service.

2. Dispositif selon la revendication 1, **caractérisé en ce que** les parois de puits (9, 16) présentent des coulisses (14, 15), et **en ce que** les coulisses (14, 15) présentent des guidages coopérant avec les tôles de guidage (12, 13).

3. Dispositif selon la revendication 2, **caractérisé en ce que** les coulisses (14, 15) dont disposées les unes par rapport aux autres en des formations en forme de V et de fragments de V et sont chacune orientées sous un angle aigu par rapport à l'axe longitudinal du puits de chute (8).

4. Dispositif selon l'une des revendications 1 à 3, **caractérisé en ce qu'**à chacune des tôles de guidage (12, 13) est associé au moins un entraînement de réglage, et **en ce que** les entraînements de réglage sont reliés ensemble par l'intermédiaire d'une commande électrique.

5. Dispositif selon l'une des revendications 1 à 4, **caractérisé en ce qu'**au moins l'une des parois de puits (9, 16) est réalisée sous forme de porte pour révision.

6. Dispositif selon l'une des revendications 1 à 5, **caractérisé en ce qu'**au moins l'une des parois de puits (9, 16) est réalisée en un matériau présentant des propriétés de transparence.

7. Dispositif selon l'une des revendications 1 à 6, **caractérisé en ce que** la commande électrique présente des capteurs de signaux, susceptibles d'être agencés dans les conduites de transport (11).

8. Dispositif selon l'une des revendications 1 à 7, **caractérisé en ce que** le puits de chute (8) présente des buses à air comprimé (18), orientée à l'intérieur de son enceinte d'écoulement (17).

9. Dispositif selon l'une des revendications 2 à 8, **caractérisé en ce que** chaque coulisse (14, 15) présente un organe de raclage, appliqué sur la tôle de guidage (12, 13) lui étant associée.

10. Dispositif selon l'une des revendications 4 à 9, **caractérisé en ce que** chaque entraînement de réglage présente une course de réglage, dont la longueur est inférieure à la profondeur de la coulisse (14, 15) lui étant chaque fois associée.
